# FASCICULE DE BREVET EUROPEEN

(11) **EP 4 232 633 B1**
(45) Date de publication et mention de la délivrance du brevet: **04.12.2024**
(21) Numéro de dépôt: 21790914.2
(22) Date de dépôt: 14.10.2021
(51) Int. Cl.: E01D 22/00, F16F 7/12, E01D 19/16

(54) **DISPOSITIF D'ABSORPTION DE L'ÉNERGIE LIBÉRÉE PAR LA DÉTENSION D'UN CÂBLE DE STRUCTURE**
VORRICHTUNG ZUR AUFNAHME DER BEIM NACHSPANNEN EINES STRUKTURKABELS FREIGESETZTEN ENERGIE
DEVICE FOR ABSORBING THE ENERGY RELEASED BY THE DETENSIONING OF A STRUCTURAL CABLE

(30) Priorité: 21.10.2020 FR 2010775
(43) Date de publication de la demande: 30.08.2023
(73) Titulaire: Soletanche Freyssinet, 92500 Rueil Malmaison (FR)
(72) Inventeur: ZIVANOVIC, Ivica, 60260 Gouvieux (FR)
(74) Mandataire: Cabinet Nony
(86) Numéro de dépôt international: PCT/EP2021/078428
(87) Numéro de publication internationale: WO 2022/084139

(56) Documents cités:
- EP-A1- 1 887 139
- DE-A1- 102019 102 688
- FR-A1- 2 839 090

## Description

### Domaine technique

L'invention concerne le domaine de la maintenance ou réparation de structures civiles telles que des ouvrages d'art. L'invention concerne plus particulièrement la détension, le sectionnement et la dépose de câbles de structure tels que des câbles de précontrainte extérieure ou de haubanage.

### Technique antérieure

De tels câbles sont soumis au sein de l'ouvrage à une tension mécanique élevée et ne peuvent être sectionnés sans précaution particulière.

Le câble est fréquemment constitué d'un faisceau d'armatures (fils, torons ou barres, le plus souvent en acier) protégé par un matériau cimentaire tel qu'un coulis ayant fait prise après injection dans une gaine enveloppe du câble.

Le brevet FR 2007394 décrit un dispositif de pontage destiné à détendre localement un câble de structure avant son sectionnement. Il comporte deux colliers de serrage disposés sur le câble et un système de liaison à vérins entre les deux colliers, permettant de régler leur écartement afin de reprendre la tension du câble. Une fois le câble détendu, il peut être sectionné entre les deux colliers. La présence de vérins rend le dispositif relativement complexe et coûteux.

Le brevet EP 1 501 984 décrit un équipement de sécurité destiné à être installé sur un câble pour dissiper une partie de l'énergie libérée par la rupture accidentelle de ce dernier. Cet équipement est constitué d'une pièce faisant office de « marteau », composée de deux demi-coquilles assemblées sur le câble, et d'une entretoise sacrificielle qui enveloppe au moins partiellement le câble, positionnée entre le marteau et une butée fixe formée par une surface de l'ouvrage traversée par le câble. En cas de rupture accidentelle du câble, l'entretoise est écrasée entre le marteau et la butée, ce qui permet d'absorber l'énergie libérée par cette rupture.

EP 1 887 139 décrit un procédé de démontage d'un câble tendu entre un premier et un deuxième points d'ancrage sur une structure.

Il existe un besoin de disposer d'un dispositif permettant de sectionner en toute sécurité un câble de structure, qui soit de construction relativement simple et qui soit facile à mettre en oeuvre.

### Exposé de l'invention

La présente invention atteint cet objectif grâce à un dispositif d'absorption de l'énergie libérée par la détension locale d'un câble de structure, comportant :
- au moins un premier collier, dit « collier de retenue », à fixer sur le câble,
- au moins un deuxième collier, dit « collier marteau », à fixer sur le câble, les colliers de retenue et marteau étant disposés sur le câble de part et d'autre de la zone de découpe,
- au moins un élément de réaction à disposer autour du câble de telle sorte que le collier marteau soit situé entre cet élément de réaction et le collier de retenue, le câble pouvant coulisser à l'intérieur de cet élément de réaction,
- un système de liaison entre le collier de retenue et l'élément de réaction, pour maintenir l'élément de réaction à une distance donnée du collier de retenue,
- au moins une entretoise sacrificielle disposée entre l'élément de réaction et le collier marteau, configurée pour se déformer sous l'effet du déplacement du collier marteau vers l'élément de réaction lors de la détension du câble suite à son sectionnement, et absorber au moins une partie de l'énergie libérée par cette détension.

Grâce à l'invention, il est possible de sectionner un câble de structure en sécurité, tout en absorbant au moins en partie (et mieux en totalité) l'énergie libérée par la détension qui fait suite au sectionnement du câble. Comparativement avec le dispositif de pontage de la demande FR 2007394, le dispositif de la présente invention est plus simple et plus facile à mettre en oeuvre, ne nécessitant pas la présence de vérins.

Il est possible d'équiper un même câble à détendre de plusieurs dispositifs selon l'invention, par exemple pour absorber la totalité de l'énergie libérée par la détension, chaque dispositif apportant une partie seulement de l'énergie.

Le dispositif selon l'invention s'appuie sur le câble et non sur des butées de l'ouvrage, n'engendrant ainsi aucune réaction directe sur l'ouvrage, à l'exception des frottements du câble dans les conduits de déviation de celui-ci.

De plus, le dispositif selon l'invention offre une grande liberté dans le choix de l'emplacement de la zone de sectionnement, et notamment ne nécessite pas un positionnement à proximité d'une surface de l'ouvrage traversée par le câble, pour reprendre l'effort de réaction lors de l'avancée du collier marteau, puisque cet effort est repris par l'élément de réaction.

L'élément de réaction comporte, de préférence, un collier. Ainsi, il peut s'étendre tout autour du câble, ce collier comportant, de préférence, deux demi-colliers. Les demi-colliers constitutifs de l'élément de réaction sont assemblés de façon à laisser le câble coulisser ou glisser (avec ou sans frottements) sur le câble.

Le système de liaison comporte avantageusement des barres reliant le collier de retenue et l'élément de réaction, par exemple deux barres ou plus. Ces barres peuvent présenter des extrémités filetées permettant le vissage de boulons.

L'entretoise sacrificielle est de préférence configurée pour se déformer plastiquement, notamment par flambage.

L'entretoise sacrificielle peut comporter au moins une plaque métallique, mieux un empilement de plaques métalliques.

L'entretoise sacrificielle peut avoir en section toute forme, notamment une forme enveloppant au moins partiellement le câble tout en lui permettant de coulisser à l'intérieur de l'entretoise, par exemple une section en U ou Oméga

L'empilement comporte par exemple entre 2 et 10 plaques.

L'entretoise sacrificielle a avantageusement une longueur au moins égale à l'allongement dudit câble sous tension, de préférence supérieure. La longueur de l'entretoise est de préférence supérieure à la course dont se déplace le collier marteau lors de la détension du câble suite à son sectionnement.

L'entretoise sacrificielle peut comporter des attaches transversales permettant de maintenir des parties en regard de l'entretoise à une distance prédéfinie l'une de l'autre.

Pour améliorer la tenue du collier de retenue ou marteau sur le câble, un matériau de calage est mis en place entre le collier et le câble.

Le dispositif comporte ainsi, de préférence, au moins un orifice d'injection du matériau de calage dans un espace s'étendant entre le collier de retenue et le câble d'une part et/ou le collier marteau et le câble d'autre part, avant le serrage du ou des colliers.

Grâce à la présence d'un tel orifice d'injection, un matériau de calage relativement fluide peut être utilisé, ce qui permet d'utiliser des colliers aussi longs que souhaitable pour disposer de la force d'ancrage nécessaire. Ainsi, le dispositif peut être utilisé pour tout type de câble de structure y compris des câbles de précontrainte extérieure, soumis à une tension importante.

De plus, la fluidité du matériau de calage lui permet de mieux remplir les fissures éventuelles du matériau cimentaire enveloppant les armatures du câble qu'un mortier gras. Cela permet ainsi un serrage du ou des colliers autour du segment de câble concerné de bonne qualité, permettant d'offrir une sécurité augmentée s'agissant du non-glissement lors du sectionnement.

Le matériau de calage peut comporter un matériau cimentaire ou une résine polymère.

Avantageusement, l'orifice d'injection est situé sur le ou les colliers. Dans ce cas, chaque collier pourvu de l'orifice d'injection comporte de préférence au moins un évent pour permettre l'échappement de l'air lors du remplissage dudit espace.

Le collier de retenue et/ou le collier marteau comporte(nt), de préférence, deux demi-colliers avec par demi-collier au moins un orifice d'injection et/ou un évent.

Lorsque le collier de retenue et/ou le collier marteau comporte(nt) deux demi-colliers, le dispositif peut comporter au moins un joint souple s'interposant entre les deux demi-colliers jusqu'au câble.

Le dispositif peut comporter des joues de coffrage annulaires à chacune des extrémités du collier de retenue et/ou du collier marteau.

Le dispositif comporte avantageusement des cales de centrage à interposer entre le collier de retenue et/ou le collier marteau et le câble avant injection du matériau de calage.

Le collier de retenue et/ou le collier marteau peut(vent) présenter une longueur supérieure ou égale à au moins 3 fois le diamètre extérieur du câble à sectionner, de préférence supérieure ou égale à au moins 5 fois le diamètre extérieur du câble à sectionner.

Avantageusement, le collier de retenue et/ou l'élément de réaction présente(nt) des renforts longitudinaux.

### Procédé de sectionnement du câble de structure

L'invention a encore pour objet, selon un autre de ses aspects, en combinaison avec ce qui précède, un procédé de sectionnement d'un câble de structure au moyen d'un dispositif tel que défini précédemment, comportant les étapes consistant à :
- Fixer sur le câble le collier de retenue,
- fixer sur le câble le collier marteau,
- disposer autour du câble l'élément de réaction, relié au collier de retenue par le système de liaison,
- disposer l'entretoise sacrificielle entre le collier marteau et l'élément de réaction,
- sectionner le câble dans la zone de sectionnement située entre le collier de retenue et le collier marteau.

Lors du sectionnement du câble, une première partie du câble reste fixe relativement au collier de retenue et une deuxième partie se déplace avec le collier marteau relativement à l'élément de réaction. L'énergie libérée par la détension du câble est absorbée, au moins en partie, par la déformation de l'entretoise sacrificielle entre le collier marteau et l'élément de réaction.

Lorsque le dispositif, en particulier le collier de retenue et/ou le collier marteau, comporte au moins un orifice d'injection d'un matériau de calage dans un espace s'étendant entre le ou les colliers et le câble, le procédé comporte, de préférence, l'étape consistant à injecter le matériau de calage dans les espaces formés entre le ou les colliers et le câble, cette injection s'effectuant à travers le ou les orifices d'injection.

Le sectionnement du câble peut être effectué par un opérateur à l'aide d'une scie à fil dont le moteur d'entraînement est situé à distance du câble et séparé de celui-ci par un élément de protection traversé par le fil, cet élément de protection pouvant être un élément de l'ouvrage, par exemple un voile (ou paroi) d'un tablier de pont, ou une paroi rapportée.

### Brève description des dessins

L'invention pourra être mieux comprise à la lecture de la description détaillée qui va suivre, d'exemples de mise en oeuvre non limitatifs de celle-ci, et à l'examen du dessin annexé, sur lequel
[Fig 1] la figure 1 représente, de manière schématique et partielle, en vue de dessus, un exemple de dispositif selon l'invention,
[Fig 2] la figure 2 est une vue selon l'axe du câble du collier de retenue du dispositif de la figure 1,
[Fig 3] la figure 3 est une vue analogue à la figure 2 du collier marteau du dispositif de la figure 1,
[Fig 4] la figure 4 est une vue analogue à la figure 2 de l'élément de réaction du dispositif de la figure 1,
[Fig 5] la figure 5 représente, de manière schématique, en vue latérale, un exemple d'entretoise sacrificielle selon l'invention,
[Fig 6] la figure 6 illustre le sectionnement du câble à l'aide d'une scie à fil,
[Fig 7] la figure 7 représente le dispositif de la figure 1 après le sectionnement du câble et déformation de l'entretoise sacrificielle,
[Fig 8] la figure 8 représente, en perspective, de manière schématique, une variante du collier de retenue, et
[Fig 9] la figure 9 est une coupe transversale du collier de retenue de la figure 8.

### Description détaillée

Dans la suite de la description, les éléments identiques ou de fonctions identiques portent le même signe de référence. À des fins de concision de la présente description, ils ne sont pas décrits en regard de chacune des figures, seules les différences entre les modes de réalisation étant décrites.

Sur les figures, les proportions réelles n'ont pas toujours été respectées, dans un souci de clarté.

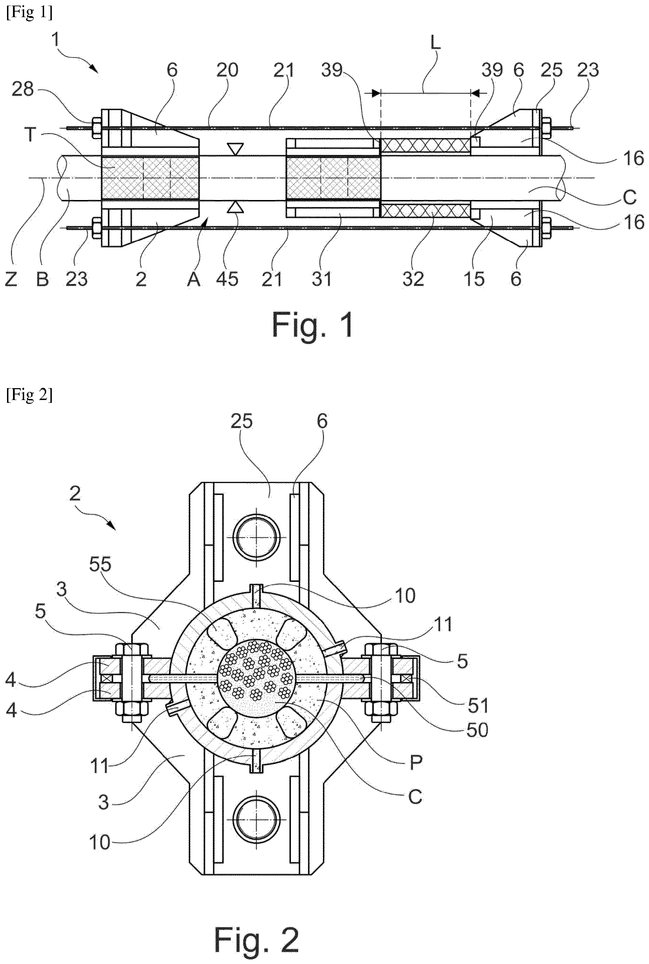

On a représenté à la figure 1 un dispositif 1 selon l'invention, d'absorption de l'énergie libérée par la détension locale d'un câble C de structure, tel qu'un câble de précontrainte extérieure ou un hauban.

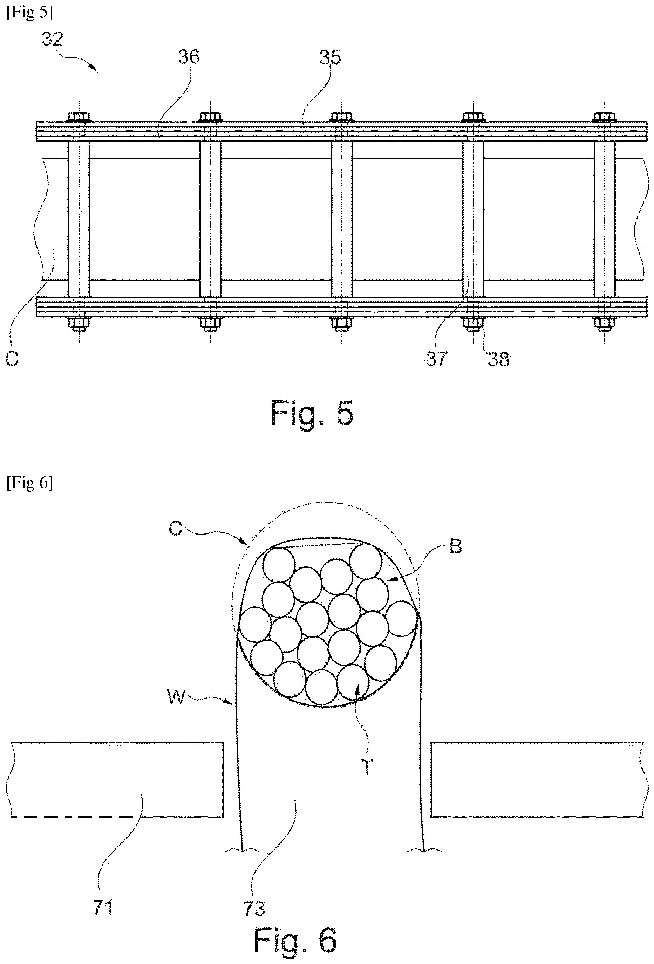

Le câble C peut comporter, comme visible plus particulièrement sur la figure 6, des armatures T noyées dans un matériau cimentaire B. Ce câble C s'étend selon un axe longitudinal Z.

Le dispositif 1 comporte un collier de retenue 2, un collier marteau 31, un élément de réaction 15 relié au collier de retenue 2 par un système de liaison 20, et une entretoise sacrificielle s'étendant entre le collier marteau 31 et l'élément de réaction 15.

Le collier de retenue 2 peut être composé, comme représenté sur la figure 2, de deux demi-colliers 3 (ou demi-coquilles), présentant sur sensiblement toute leur longueur des brides 4 assemblées au moyen d'une succession de boulons 5. Dans cet exemple, le collier de retenue 2 présente une longueur supérieure à 3 fois le diamètre extérieur du câble C.

Chaque demi-collier 3 peut présenter, comme illustré, des renforts longitudinaux 6.

Dans cet exemple, des joues de coffrage annulaires ferment axialement l'espace entre le collier de retenue 2 et le câble C, et créent un volume sensiblement fermé où un matériau de calage P peut être injecté. Ces joues sont par exemple maintenues sur le collier de retenue 2 par vissage ou tout autre moyen de fixation approprié.

Chaque demi-collier 3 comporte au moins un orifice d'injection 10 pour l'injection d'un matériau de calage P. Cet orifice d'injection 10 peut être équipé, le cas échéant, d'un raccord rapide ou fileté, permettant de raccorder un tuyau relié à une pompe pour délivrer le matériau de calage P, éventuellement sous pression. Chaque demi-collier 3 peut également comporter au moins un évent 11, pour permettre la sortie de l'air lors de l'injection du matériau de calage P, et purger l'excédent de matériau de calage P en fin d'injection.

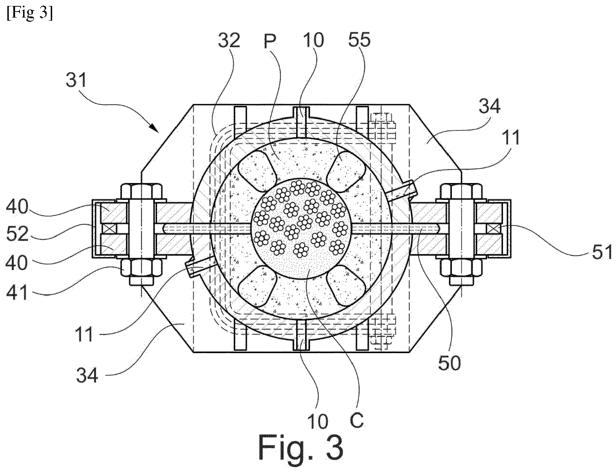

Comme illustré à la figure 3, le collier marteau 31 peut présenter une structure similaire au collier de retenue 2 et être composé de deux demi-colliers 34 (ou demi-coquilles), présentant sur sensiblement toute leur longueur des brides 40 assemblées au moyen d'une succession de boulons 41.

Comme pour le collier de retenue 2, des joues de coffrage annulaires, non visibles sur cette figure, ferment axialement l'espace entre le collier marteau 31 et le câble C, et créent un volume sensiblement fermé où un matériau de calage P peut être injecté. Les joues sont par exemple maintenues sur le collier marteau 31 par vissage ou tout autre moyen de fixation approprié.

Chaque demi-collier 34 comporte au moins un orifice d'injection 10 pour l'injection du matériau de calage P. Chaque demi-collier 34 peut également comporter au moins un évent 11.

Des joints 50, de préférence souples, s'interposent entre les brides 3 du collier de retenue 2 et les brides 40 du collier marteau 31. Chaque joint 50 s'étend à l'intérieur du collier jusqu'au câble C. Le matériau du joint 50 est par exemple un élastomère ou un matériau compressible tel que du polystyrène ou du contreplaqué.

Des cales rigides 51 peuvent être disposées entre les brides, le long de leur bord extérieur, pour régler l'écartement entre les brides avant l'injection du matériau de calage P. Des crapauds 52 peuvent enserrer les brides sur leur bord extérieur, pour les maintenir fixement en l'absence des boulons ou de serrage de ces derniers.

Le dispositif 1 peut comporter, comme illustré sur les figures 2 et 3, des cales 55 qui sont disposées entre le câble C et les colliers pour les maintenir centrés pendant l'injection du matériau de calage P, comme cela sera détaillé plus loin. Ces cales 55 sont de préférence réalisées au préalable avec le même matériau que celui qui sera injecté entre les colliers et le matériau cimentaire B du câble.

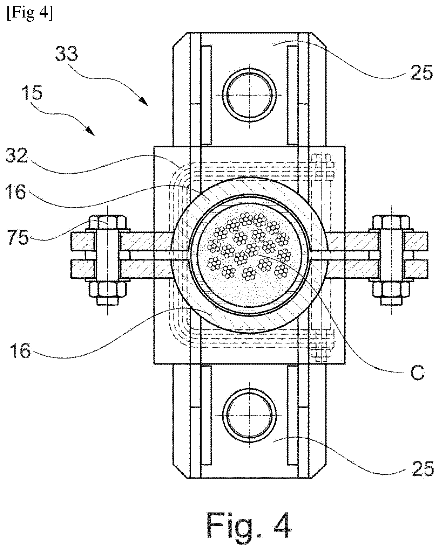

Comme illustré à la figure 4, l'élément de réaction 15 peut comporter un collier 33 composé de deux demi-colliers 16 fixés entre eux à l'aide de boulons 75, et à l'intérieur duquel le câble C peut coulisser.

Le système de liaison 20 comporte un ensemble de barres 21, par exemple au nombre de deux comme illustré sur la figure 1, disposées de part et d'autre du câble C. Ces barres 21 peuvent être protégées par des manchons, par exemple en PEHD, au moins dans la zone A de sectionnement du câble C.

Les barres 21 présentent chacune des extrémités filetées 23 engagées à travers des plaques d'appui 25 des renforts 6, des écrous 28 vissés sur les extrémités 23 assurant le maintien de l'écartement entre le collier de retenue 2 et l'élément de réaction 25.

L'entretoise sacrificielle 32 est configurée pour se déformer sous l'effet du déplacement du collier marteau 31 vers l'élément de réaction 15 lors de la détension du câble C suite à son sectionnement, pour absorber au moins une partie de l'énergie libérée par cette détension.

Dans l'exemple considéré, l'entretoise sacrificielle 32 est configurée pour se déformer plastiquement par flambage lorsque le câble C est sectionné, et présente de préférence une longueur initiale L supérieure à la course de déplacement du collier marteau suite à la détension.

Pour des armatures en acier dont le module d'élasticité est voisin de 200GPa et dont la classe de résistance est de 1860MPa, l'allongement typique des armatures est voisin de 7mm/m. En connaissant la longueur libre du câble C, il est ainsi possible de déterminer la longueur L théorique nécessaire pour l'entretoise sacrificielle 32.

Dans l'exemple de la figure 5, l'entretoise sacrificielle 32 est un empilement 35 composé d'une pluralité de plaques métalliques 36 (ou feuillets), par exemple en aluminium ou en acier. L'entretoise sacrificielle 32 peut présenter une section en U en Oméga ou dédoublée en deux empilements de plaques 36, s'étendant autour du câble C, avec des parties en regard reliées par des attaches transversales 37 filetées, ou constituées de tubes, et associées à des tiges filetées, sur lesquelles sont vissés des écrous 38.

L'entretoise sacrificielle 32 est en contact uniforme sur des plaques d'extrémité 39 sur le collier marteau 31 d'une part et sur l'élément de réaction 15 d'autre part.

Pour utiliser le dispositif 1, le câble C peut tout d'abord être préparé en retirant sa gaine extérieure sur des segments de longueur suffisante pour permettre la mise en place du collier de retenue 2 et du collier marteau 31.

La découpe de cette gaine est effectuée avec les précautions adaptées pour ne pas endommager les armatures T du câble. On opère de préférence des découpes circonférentielles aux extrémités du segment concerné, suivies d'une découpe longitudinale permettant d'ouvrir et de retirer le segment de gaine.

Sur les segments de câble dont la gaine a été retirée et destinés au serrage du collier de retenue 2 et du collier marteau 31, le matériau cimentaire B peut être frappé au marteau pour retirer toute épaufrure puis bouchardé au moyen d'une boucharde manuelle ou mécanique selon l'intensité requise, pour donner une rugosité suffisante au matériau cimentaire B. Cette opération permet d'éliminer d'éventuelles zones de matériau friable (éléments fragiles et facilement désolidarisés de la masse de matériau cimentaire B enveloppant les armatures) et d'assurer une meilleure adhérence avec le matériau de calage P injecté entre matériau cimentaire B et chaque collier.

Dans la zone A ménagée pour le sectionnement du câble C, le matériau cimentaire B est conservé en l'état afin d'éviter d'endommager les armatures T avant découpe.

Les demi-colliers du collier de retenue 2 et du collier marteau 31 sont positionnés sur le câble C. Les colliers sont maintenus en position avec des supports appropriés en partie basse, complétés par les cales 55. Ces dernières permettent que chaque collier soit sensiblement centré autour du câble C, ce centrage étant souhaitable pour la bonne distribution des efforts dans le dispositif 1.

Les joints souples 50 sont interposés entre les demi-colliers, et les cales rigides 51 sont ajoutées localement et provisoirement afin de maintenir la distance entre les demi-colliers, si nécessaire.

Les demi-colliers sont ainsi maintenus écartés d'une distance appropriée avant serrage, qui est par exemple de 5 à 10 mm pour un diamètre de câble C voisin de 100 mm.

Les joints 50 permettent d'éviter que le matériau de calage P ne crée un joint rigide, c'est-à-dire un point dur, entre les demi-colliers du collier de retenue 2 et du collier marteau 31, et que le matériau de calage P, après prise et durcissement, ne constitue un tube qui, par effet de voute (pression circonférentielle) empêcherait un serrage adéquat, c'est-à-dire l'application d'un effort de serrage transversal sur les armatures T et le matériau cimentaire B par les boulons serrés sur le plan de joint du ou des colliers.

Une fois les demi-colliers en place, les boulons peuvent être serrés légèrement.

Les joues de coffrage annulaires sont posées à chacune des extrémités des demi-colliers pour obtenir une fermeture étanche du volume défini entre les demi-colliers et le câble C.

Le matériau de calage P peut alors être injecté via les orifices d'injection 10 sous forme fluide dans le volume délimité par chaque demi-collier et le câble C. Grâce à sa fluidité, le matériau de calage P injecté peut remplir le volume de façon optimale et s'immiscer le cas échéant dans les fissures éventuelles du matériau cimentaire B du câble C.

En fonction de la nature du câble C, le matériau de calage P peut être soit un mortier cimentaire soit une résine polymère, faisant prise en solidifiant pour atteindre une résistance adaptée au serrage transversal des colliers.

Lorsque le matériau de calage P a commencé sa prise et présente une tenue suffisante, les éventuelles cales 51 présentes dans l'épaisseur du joint souple 50 et, éventuellement, le joint souple 50 peuvent être retirés. Tout surplus de matériau de calage P présent dans cette épaisseur est retiré avant durcissement.

Des éprouvettes prélevées lors de l'injection du matériau de calage P permettent d'évaluer sa montée en résistance pour garantir une valeur minimale en compression (par exemple 40 MPa pour un matériau de calage cimentaire), avant serrage des boulons du ou des colliers 2 et 15.

Les boulons sont serrés successivement, dans un ordre favorable à une bonne répartition des efforts et de nature à limiter les pertes induites par la non-simultanéité des serrages. Par exemple, on effectue au moins deux passes successives suivant un schéma dit « en quinconce », alternant les deux extrémités du collier et les deux côtés. Le serrage est effectué de préférence au moyen d'une clé hydraulique dont l'effort ou couple de serrage est calibré suivant la note de calcul du collier.

Ensuite, l'élément de réaction 15 est disposé autour du câble C et est relié au collier de retenue 2 par le système de liaison 20. On peut alors vérifier le bon alignement du collier de retenue 2, de l'élément de réaction 15 et des barres de traction 21. Un complément de calage rigide peut être appliqué si nécessaire.

Ensuite, l'entretoise sacrificielle 32 est disposée entre le collier marteau 30 et l'élément de réaction 15. Les écrous 28 des barres 21 sont serrés de telle façon que l'entretoise sacrificielle 32 est en contact uniforme sur les plaques d'extrémité 39 du collier marteau 31 d'une part, de l'élément de réaction 15 d'autre part.

Le câble C est alors prêt à être sectionné dans la zone de sectionnement A, avec tout moyen qui ne risque pas d'endommager les barres 21.

On préfère un moyen de découpe mécanique par rapport à une découpe par chauffage (chalumeau oxyacétylénique) susceptible d'exposer davantage les barres 21. On utilise par exemple une scie à fil diamanté W tel qu'illustré sur la figure 6, s'appliquant en 45.

Le fil diamanté W peut passer à travers des ouvertures 73 réalisées sur un élément de l'ouvrage, par exemple un voile (ou paroi) de tablier 71 de pont. Le sectionnement peut ainsi être réalisé par un opérateur à distance.

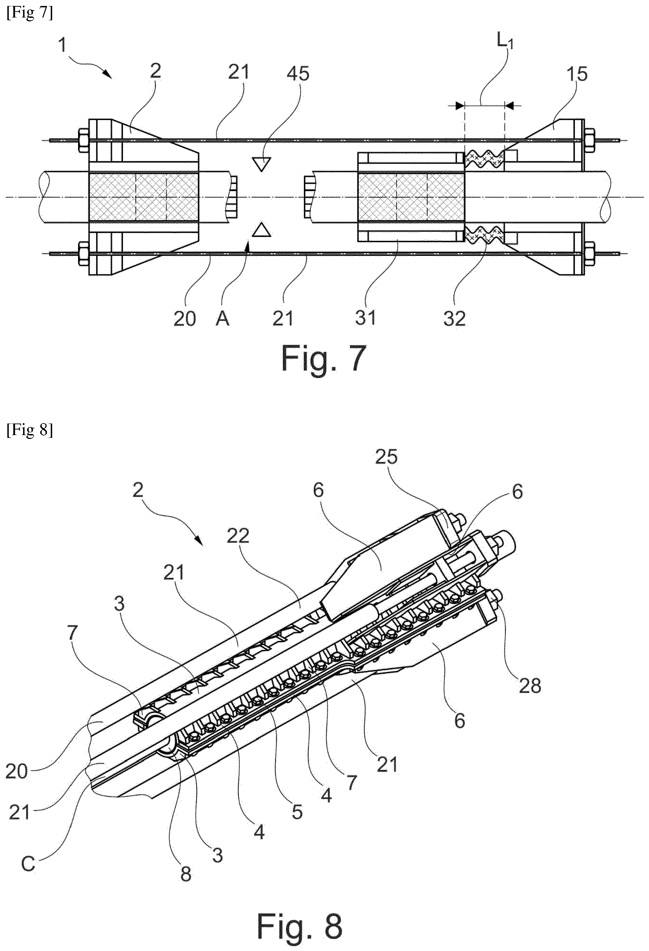

Comme visible sur la figure 7, après le sectionnement du câble C, la longueur Li de l'entretoise sacrificielle 32 est inférieure à sa longueur L avant sectionnement, l'entretoise 32 s'étant déformée par flambage et déformation plastique.

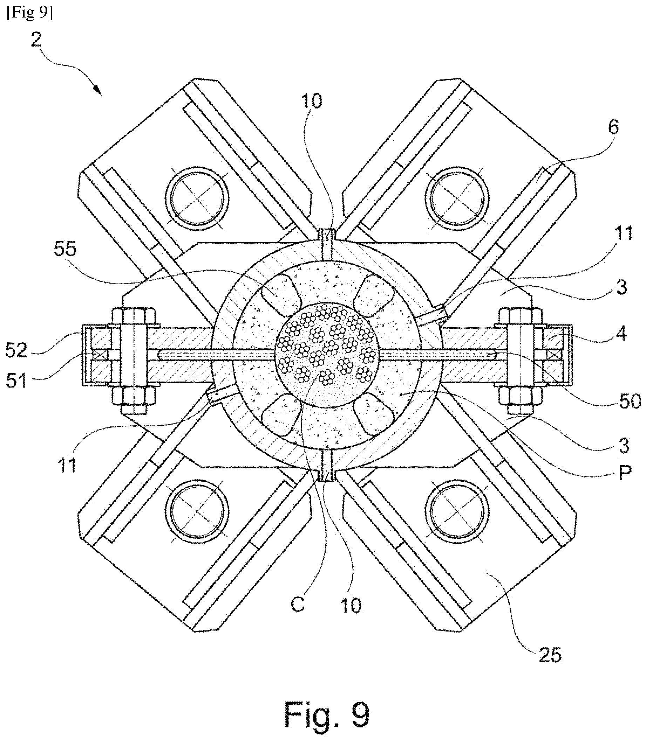

Bien entendu, l'invention n'est pas limitée à l'exemple qui vient d'être décrit. Par exemple, le dispositif est réalisé avec un nombre de barres plus grand, par exemple égal à 4, comme illustré sur les figures 8 et 9.

On voit également sur la figure 8 notamment que chaque demi-collier 3 peut comporter un ensemble de raidisseurs transversaux 7, se raccordant perpendiculairement aux brides 4 entre les trous destinés à recevoir les boulons 5.

Sur la figure 8, on voit que les barres 21 sont protégées par des manchons 22, par exemple en PEHD.

Sur la figure 8, on voit également l'une des joues 8 de coffrage qui ferment l'espace entre le collier de retenue 2 et le câble C.

Le ou les colliers peuvent être formés, le cas échéant, de plus de deux parties de collier.

Dans une variante, le ou les éléments disposés entre les demi-colliers pour former des volumes étanches pour l'injection du matériau de calage sont laissés en place, et écrasés durant le serrage des colliers.

## Revendications

1. Dispositif (1) d'absorption de l'énergie libérée par la détension locale d'un câble (C) de structure, comportant :
- au moins un premier collier (2), dit « collier de retenue », à fixer sur le câble (C),
- au moins un deuxième collier (31), dit « collier marteau », à fixer sur le câble (C), les colliers de retenue (2) et marteau (31) étant disposés sur le câble (C) de part et d'autre de la zone de découpe (A),
- au moins un élément de réaction (15) à disposer autour du câble (C) de telle sorte que le collier marteau (31) soit situé entre cet élément de réaction (15) et le collier de retenue (2), le câble (C) pouvant coulisser à l'intérieur de cet élément de réaction (15),
- un système de liaison (20) entre le collier de retenue (2) et l'élément de réaction (15), pour maintenir l'élément de réaction (15) à une distance donnée du collier de retenue (2),
- au moins une entretoise sacrificielle (32) disposée entre l'élément de réaction (15) et le collier marteau (31), configurée pour se déformer sous l'effet du déplacement du collier marteau (31) vers l'élément de réaction (15) lors de la détension du câble (C) suite à son sectionnement, et absorber au moins une partie de l'énergie libérée par cette détension.

2. Dispositif selon la revendication 1, l'élément de réaction (15) comportant un collier (33).

3. Dispositif selon l'une des revendications précédentes, le système de liaison (20) comportant des barres (21) reliant le collier de retenue (2) et l'élément de réaction (15).

4. Dispositif selon l'une quelconque des revendications précédentes, l'entretoise sacrificielle (32) comportant au moins une plaque métallique (36), mieux au moins un empilement (35) de plaques, notamment des plaques en acier ou en aluminium.

5. Dispositif selon l'une quelconque des revendications précédentes, comportant au moins un orifice (10) d'injection d'un matériau de calage (P) dans un espace s'étendant entre le collier de retenue (2) et le câble (C) d'une part et/ou le collier marteau (31) et le câble (C) d'autre part, avant le serrage du ou des colliers (2 ; 31).

6. Dispositif selon la revendication précédente, l'orifice (10) d'injection étant situé sur le ou les colliers (2 ; 31), chaque collier (2 ; 31) pourvu de l'orifice (10) d'injection comportant de préférence au moins un évent (11) pour permettre l'échappement de l'air lors du remplissage dudit espace.

7. Dispositif selon l'une des revendications 5 et 6, le collier de retenue (2) et/ou le collier marteau (31) comportant deux demi-colliers (3, 34) avec par demi-collier (3 ; 34) au moins un orifice d'injection (10) et/ou un évent (11).

8. Dispositif selon l'une quelconque des revendications précédentes, le collier de retenue (2) et/ou le collier marteau (31) comportant deux demi-colliers (3, 34), le dispositif (1) comportant au moins un joint souple (50) s'interposant entre les deux demi-colliers (3, 34) jusqu'au câble (C).

9. Dispositif selon l'une quelconque des revendications précédentes, comportant des cales (55) de centrage à interposer entre le collier de retenue (2) et/ou le collier marteau (31) et le câble (C) avant injection du matériau de calage (P).

10. Dispositif selon l'une quelconque des revendications précédentes, le collier de retenue (2) et/ou le collier marteau (31) présentant une longueur supérieure ou égale à au moins 3 fois le diamètre extérieur du câble (C) à sectionner, de préférence supérieure ou égale à au moins 5 fois le diamètre extérieur du câble (C) à sectionner.

11. Dispositif selon l'une quelconque des revendications précédentes, le collier de retenue (2) et/ou l'élément de réaction (15) présentant des renforts longitudinaux (6).

12. Procédé de sectionnement d'un câble (C) de structure au moyen d'un dispositif (1) selon l'une quelconque des revendications précédentes, comportant les étapes consistant à :
- Fixer sur le câble (C) le collier de retenue (2),
- fixer sur le câble (C) le collier marteau (31),
- disposer autour du câble (C) l'élément de réaction (15), relié au collier de retenue (2) par le système de liaison (20),
- disposer l'entretoise sacrificielle (32) entre le collier marteau (31) et l'élément de réaction (15),
- sectionner le câble (C) dans la zone de sectionnement (A) située entre le collier de retenue (2) et le collier marteau (31).

13. Procédé selon la revendication 12, le dispositif (1) étant selon la revendication 5 ou 6, le procédé comportant l'étape consistant à injecter un matériau de calage (P) dans les espaces formés entre le ou les colliers (2, 31) et le câble (C), cette injection s'effectuant à travers le ou les orifices (10) d'injection.

## Patentansprüche

1. Vorrichtung (1) zur Aufnahme der durch die lokale Entspannung eines Strukturkabels (C) freigesetzten Energie, welche umfasst:
- mindestens eine erste Schelle (2), "Halteschelle" genannt, die an dem Kabel (C) zu befestigen ist,
- mindestens eine zweite Schelle (31), "Hammerschelle" genannt, die an dem Kabel (C) zu befestigen ist, wobei die Halteschelle (2) und die Hammerschelle (31) auf dem Kabel (C) beiderseits des Schneidbereichs (A) angeordnet sind,
- mindestens ein Reaktionselement (15), das derart um das Kabel (C) herum anzuordnen ist, dass sich die Hammerschelle (31) zwischen diesem Reaktionselement (15) und der Halteschelle (2) befindet, wobei das Kabel (C) im Inneren dieses Reaktionselements (15) gleiten kann,
- ein Verbindungssystem (20) zwischen der Halteschelle (2) und dem Reaktionselement (15) zum Halten des Reaktionselements (15) in einem gegebenen Abstand von der Halteschelle (2),
- mindestens ein zwischen dem Reaktionselement (15) und der Hammerschelle (31) angeordnetes Opfer-Abstandsstück (32), das dafür ausgelegt ist, sich unter der Wirkung der Bewegung der Hammerschelle (31) zum Reaktionselement (15) hin bei der Entspannung des Kabels (C) im Anschluss an dessen Zerschneiden zu verformen und wenigstens einen Teil der Energie aufzunehmen, die durch diese Entspannung freigesetzt wird.

2. Vorrichtung nach Anspruch 1, wobei das Reaktionselement (15) eine Schelle (33) umfasst.

3. Vorrichtung nach einem der vorhergehenden Ansprüche, wobei das Verbindungssystem (20) Stäbe (21) umfasst, welche die Halteschelle (2) und das Reaktionselement (15) verbinden.

4. Vorrichtung nach einem der vorhergehenden Ansprüche, wobei das Opfer-Abstandsstück (32) mindestens eine Metallplatte (36), besser mindestens einen Stapel (35) von Platten, insbesondere Platten aus Stahl oder aus Aluminium, umfasst.

5. Vorrichtung nach einem der vorhergehenden Ansprüche, welche mindestens eine Öffnung (10) zum Einspritzen eines Füllmaterials (P) in einen Raum, der sich zwischen der Halteschelle (2) und dem Kabel (C) einerseits und/oder der Hammerschelle (31) und dem Kabel (C) andererseits erstreckt, vor dem Festziehen der Schelle oder der Schellen (2; 31) umfasst.

6. Vorrichtung nach dem vorhergehenden Anspruch, wobei sich die Einspritzöffnung (10) an der oder den Schellen (2; 31) befindet, wobei jede Schelle (2; 31), die mit einer Einspritzöffnung (10) versehen ist, vorzugsweise mindestens eine Entlüftungsöffnung (11) umfasst, um das Entweichen der Luft beim Füllen des Raumes zu ermöglichen.

7. Vorrichtung nach einem der Ansprüche 5 und 6, wobei die Halteschelle (2) und/oder die Hammerschelle (31) zwei Halbschellen (3, 34) umfassen, mit mindestens einer Einspritzöffnung (10) und/oder einer Entlüftungsöffnung (11) pro Halbschelle (3, 34).

8. Vorrichtung nach einem der vorhergehenden Ansprüche, wobei die Halteschelle (2) und/oder die Hammerschelle (31) zwei Halbschellen (3, 34) umfassen, wobei die Vorrichtung (1) mindestens eine flexible Dichtung (50) umfasst, die zwischen den zwei Halbschellen (3, 34) bis zum Kabel (C) angeordnet ist.

9. Vorrichtung nach einem der vorhergehenden Ansprüche, welche Zentrierkeile (55) umfasst, die vor dem Einspritzen des Füllmaterials (P) zwischen der Halteschelle (2) und/oder der Hammerschelle (31) und dem Kabel (C) anzuordnen sind.

10. Vorrichtung nach einem der vorhergehenden Ansprüche, wobei die Halteschelle (2) und/oder die Hammerschelle (31) eine Länge aufweisen, die mindestens größer oder gleich dem Dreifachen des Außendurchmessers des zu zerschneidenden Kabels (C) ist, vorzugsweise mindestens größer oder gleich dem Fünffachen des Außendurchmessers des zu zerschneidenden Kabels (C).

11. Vorrichtung nach einem der vorhergehenden Ansprüche, wobei die Halteschelle (2) und/oder das Reaktionselement (15) Längsversteifungen (6) aufweisen.

12. Verfahren zum Zerschneiden eines Strukturkabels (C) mittels einer Vorrichtung (1) nach einem der vorhergehenden Ansprüche, welches die folgenden Schritte umfasst:
- Befestigen der Halteschelle (2) am Kabel (C),
- Befestigen der Hammerschelle (31) am Kabel (C),
- Anordnen des Reaktionselements (15), das mit der Halteschelle (2) durch das Verbindungssystem (20) verbunden ist, um das Kabel (C) herum,
- Anordnen des Opfer-Abstandsstücks (32) zwischen der Hammerschelle (31) und dem Reaktionselement (15),
- Zerschneiden des Kabels (C) im Schneidbereich (A), der sich zwischen der Halteschelle (2) und der Hammerschelle (31) befindet.

13. Verfahren nach Anspruch 12, wobei die Vorrichtung (1) eine Vorrichtung nach Anspruch 5 oder 6 ist, wobei das Verfahren den Schritt des Einspritzens eines Füllmaterials (P) in die Räume umfasst, die zwischen der oder den Schellen (2, 31) und dem Kabel (C) ausgebildet sind, wobei dieses Einspritzen durch die Einspritzöffnung oder -Öffnungen (10) hindurch erfolgt.

## Claims

1. Device (1) for absorbing energy released by the local detensioning of a structural cable (C), comprising:
- at least one first collar (2), called "retaining collar", to be fixed to the cable (C),
- at least one second collar (31), called "hammer collar", to be fixed to the cable (C), the retaining (2) and hammer (31) collars being disposed on the cable (C) on either side of the cutting zone (A),
- at least one reaction element (15) to be disposed around the cable (C) such that the hammer collar (31) is situated between this reaction element (15) and the retaining collar (2), the cable (C) being able to slide inside this reaction element (15),
- a link system (20) between the retaining collar (2) and the reaction element (15), to keep the reaction element (15) at a given distance from the retaining collar (2),
- at least one sacrificial spacer (32) disposed between the reaction element (15) and the hammer collar (31), configured to be deformed under the effect of the displacement of the hammer collar (31) toward the reaction element (15) upon the detensioning of the cable (C) following the cutting thereof, and to absorb at least a part of the energy released by this detensioning.

2. Device according to claim 1, the reaction element (15) comprising a collar (33).

3. Device according to one of the preceding claims, the link system (20) comprising bars (21) linking the retaining collar (2) and the reaction element (15).

4. Device according to any one of the preceding claims, the sacrificial spacer (32) comprising at least one metal plate (36), better at least a stack (35) of plates, notably of plates made of steel or of aluminium.

5. Device according to any one of the preceding claims, comprising at least one orifice (10) for injecting a wedge material (P) into a space extending between the retaining collar (2) and the cable (C) on the one hand and/or the hammer collar (31) and the cable (C) on the other hand, before the tightening of the collar or collars (2; 31).

6. Device according to the preceding claim, the injection orifice (10) being situated on the collar or collars (2; 31), each collar (2; 31) provided with the injection orifice (10) preferably comprising at least one vent (11) to allow air to escape during the filling of said space.

7. Device according to one of Claims 5 and 6, the retaining collar (2) and/or the hammer collar (31) comprising two half-collars (3, 34) with, for each half-collar (3; 34), at least one injection orifice (10) and/or one vent (11).

8. Device according to any one of the preceding claims, the retaining collar (2) and/or the hammer collar (31) comprising two half-collars (3, 34), the device (1) comprising at least one flexible seal (50) being interposed between the two half-collars (3, 34) to the cable (C).

9. Device according to any one of the preceding claims, comprising centring wedges (55) to be interposed between the retaining collar (2) and/or the hammer collar (31) and the cable (C) before injection of the wedge material (P) .

10. Device according to any one of the preceding claims, the retaining collar (2) and/or the hammer collar (31) having a length greater than or equal to at least three times the outer diameter of the cable (C) to be cut, preferably greater than or equal to at least five times the outer diameter of the cable (C) to be cut.

11. Device according to any one of the preceding claims, the retaining collar (2) and/or the reaction element (15) having longitudinal reinforcers (6).

12. Method for cutting a structural cable (C) by means of a device (1) according to any one of the preceding claims, comprising the steps of:
- fixing the retaining collar (2) to the cable (C),
- fixing the hammer collar (31) to the cable (C),
- disposing the reaction element (15), linked to the retaining collar (2) by the link system (20), around the cable (C),
- disposing the sacrificial spacer (32) between the hammer collar (31) and the reaction element (15),
- cutting the cable (C) in the cutting zone (A) situated between the retaining collar (2) and the hammer collar (31).

13. Method according to Claim 12, the device (1) being according to claim 5 or 6, the method comprising the step of injecting a wedge material (P) into the spaces formed between the collar or collars (2, 31) and the cable (C), this injection being performed through the injection orifice or orifices (10).
